# EUROPEAN PATENT APPLICATION

(11) **EP 4 746 180 A1**
(43) Date of publication of application: **20.05.2026**
(21) Application number: 23955267.2
(22) Date of filing: 07.11.2023
(51) Int. Cl.: H01M 50/531, H01M 10/6556, H01M 10/6567

(54) **CURRENT COLLECTOR ASSEMBLY, LIQUID COOLING SYSTEM, CASE OF BATTERY, BATTERY, AND ELECTRICAL APPARATUS**

(30) Priority: 13.10.2023 CN 202322757757 U
(71) Applicant: Contemporary Amperex Technology Co., Limited, Ningde, Fujian 352100 (CN)
(72) Inventor: WANG, Yawei, Ningde, Fujian 352100 (CN); LIU, Yang, Ningde, Fujian 352100 (CN); ZHAO, Bin, Ningde, Fujian 352100 (CN); YU, Dingshan, Ningde, Fujian 352100 (CN)
(74) Representative: Ziebig Hengelhaupt Intellectual Property Attorneys Patentanwaltskanzlei PartGmbB
(86) International application number: PCT/CN2023/130236
(87) International publication number: WO 2025/076897

(57) **Abstract**

The present application discloses a current collector assembly, a liquid cooling system, a case of a battery, a battery, and an electrical apparatus. The current collector assembly comprises a plurality of current collectors; each current collector comprises a main body portion, a first end portion, and a second end portion, and the first end portion and the second end portion are located on two opposite sides of the main body portion; the second end portion of one current collector in the current collector assembly is in interference connection with the first end portion of the other current collector in the current collector assembly. In this way, the two current collectors in the current collector assembly can be directly assembled, reducing the use of an adapter pipe, omitting the process of inserting the adapter pipe, reducing the complexity of assembling the current collector assembly, and reducing the cost.

## Description

### CROSS-REFERENCE TO RELATED APPLICATION

The present application claims priority to Chinese Patent Application No. 2023227577572, filed on October 13, 2023 and entitled "MANIFOLD ASSEMBLY, LIQUID COOLING SYSTEM, CASE OF BATTERY, BATTERY, AND ELECTRIC DEVICE", the content of which is incorporated herein by reference in its entirety.

### TECHNICAL FIELD

The present application relates to the technical field of batteries, and in particular, to a manifold assembly, a liquid cooling system, a case of a battery, a battery, and an electric device.

### BACKGROUND

With the development of battery technologies, battery cells are being applied in an increasing number of fields, and are gradually replacing traditional fossil energy in the field of automotive power. The battery cells can store chemical energy and controllably convert the chemical energy to electric energy. The rechargeable battery cells can continue to be used by activating the active substance through charging after the battery is discharged.

During use, heat is generated by the battery cells, and the heat generated by the battery cells is generally dissipated by a water cooling system. The water cooling system includes a plurality of manifolds and a plurality of adapter tubes, and two adjacent manifolds are connected via the adapter tubes, resulting in complex assembly and high costs.

### SUMMARY

In view of the above problem, the present application provides a manifold assembly, a liquid cooling system, a case of a battery, a battery, and an electric device, such that the direct interference connection between two manifolds of the manifold assembly can be achieved, thereby reducing the use of adapter tubes, reducing the assembly complexity of the manifold assembly, and reducing costs.

In a first aspect, the present application provides a manifold assembly, where the manifold assembly includes a plurality of manifolds, each manifold includes a main body part, a first end part, and a second end part; the first end part and the second end part are located on two opposite sides of the main body part, and a second end part of one manifold of the manifold assembly is in interference connection with a first end part of the other manifold of the manifold assembly.

In the above manner, through the interference connection between the second end part of the one manifold of the manifold assembly and the first end part of the other manifold of the manifold assembly, the two manifolds of the manifold assembly can be directly assembled, thereby reducing the use of adapter tubes, omitting the process of inserting the adapter tubes, reducing the assembly complexity of the manifold assembly, and reducing costs. In addition, the direct assembly of the two manifolds of the manifold assembly can reduce the connection points between connecting tubes and the two manifolds, thereby reducing the risk of failure of the manifold assembly.

In some embodiments, the cross-sectional area of the second end part is smaller than the cross-sectional area of the first end part, thereby enabling the second end part of the one manifold of the manifold assembly to be located in the first end part of the other manifold of the manifold assembly.

In the above manner, the assembly of the second end part of the one manifold of the manifold assembly into the first end part of the other manifold is facilitated, so as to reduce the assembly complexity of the manifold assembly.

In some embodiments, both the first end part and the second end part are in a flat tubular shape.

In the above manner, both the first end part and the second end part are in a flat tubular shape, such that the cross-sectional area of the first end part and the cross-sectional area of the second end part can be increased, and the space occupied by the manifold can be reduced.

In some embodiments, the cross-sectional area of the second end part decreases in an extension direction of the second end part.

In the above manner, the cross-sectional area of the second end part decreases in the extension direction of the second end part, such that the second end part of the one manifold of the manifold assembly can be in interference connection with the first end part of the other manifold, thereby improving the sealing performance between the second end part and the first end part. In addition, the cross-sectional area of the second end part gradually decreases in the extension direction of the second end part, such that the outer surface of the second end part is an inclined surface and plays a guiding role.

In some embodiments, both the first end part and the second end part are cylindrical.

In some embodiments, each manifold includes at least one first sealing member, and the first sealing member is arranged on the second end part.

In the above manner, the first sealing member is arranged on the second end part. When the second end part of the one manifold of the manifold assembly is assembled into the first end part of the other manifold, the first sealing member is located between the second end part and the first end part, and is configured to seal a gap between the second end part and the first end part, thereby improving the sealing performance of the manifold assembly.

In some embodiments, each manifold further includes two first sealing members, and the two first sealing members are spaced apart on the second end part in the extension direction of the second end part.

In the above manner, the two first sealing members are spaced apart on the second end part. The two first sealing members seal a gap between the second end part and the first end part, thereby further improving the sealing performance of the manifold assembly.

In some embodiments, each manifold further includes a first guiding part, one end of the first end part is connected to the main body part, and the other end of the first end part is connected to the first guiding part.

In the above manner, the first guiding part is arranged at the other end of the first end part, and the first guiding part is configured to guide the second end part of one manifold of the manifold assembly to be assembled into the first end part of the other manifold, thereby improving the assembly efficiency of the manifold assembly.

In some embodiments, the cross-sectional area of the first guiding part increases in an extension direction of the first end part.

In the above manner, the cross-sectional area of the first guiding part increases in the extension direction of the first end part, and the cross-sectional area of an end of the first guiding part distal to the main body part is relatively large, which helps guide the second end part of the one manifold of the manifold assembly to be assembled into the first end part of the other manifold.

In some embodiments, each manifold further includes a second guiding part connected to an end of the second end part distal to the main body part.

In the above manner, the second guiding part is arranged at an end of the second end part distal to the main body part, and is configured to guide the second end part of one manifold of the manifold assembly to be assembled into the first end part of the other manifold, thereby improving the assembly efficiency of the manifold assembly.

In some embodiments, the cross-sectional area of the second guiding part decreases in an extension direction of the second end part.

In some embodiments, each manifold further includes a second sealing member, and the second sealing member is arranged on an inner sidewall of the first end part.

In the above manner, the second sealing member is arranged on the inner sidewall of the first end part. The second end part of the one manifold of the manifold assembly is assembled into the first end part of the other manifold; that is, the second sealing member is located between the first end part and the second end part, and is configured to seal a gap between the first end part and the second end part, thereby improving the sealing performance of the manifold assembly.

In some embodiments, each manifold further includes a first guiding part and a second sealing member, one end of the first end part is connected to the main body part, the other end of the first end part is connected to the first guiding part, and the second sealing member is arranged on an inner sidewall of the first guiding part.

In a second aspect, the present application provides a liquid cooling system. The liquid cooling system includes a plurality of liquid cooling plates spaced apart from each other, where at least one cooling channel is formed in each liquid cooling plate in a length direction of the liquid cooling plate; and the manifold assembly according to the above, where the manifold of the manifold assembly is arranged at an end of the liquid cooling plate, a first manifold channel is formed in the main body part of the manifold, and the first manifold channel is in communication with the cooling channel.

In some embodiments, a second manifold channel is formed in the first end part and the second end part of the manifold, and the second manifold channel is in communication with the first manifold channel.

In a third aspect, the present application provides a case of a battery. The case includes the above liquid cooling system, and the liquid cooling plate of the liquid cooling system is attached to the battery cell to cool the battery cell.

In a fourth aspect, the present application provides a battery. The battery includes a plurality of battery cells and the above liquid cooling system. At least part of the plurality of battery cells are arranged between two adjacent liquid cooling plates in the liquid cooling system; the liquid cooling system is configured to cool two opposite side surfaces of each of the at least part of the battery cells.

In a fifth aspect, the present application provides an electric device. The electric device includes the above battery.

Different from the prior art, the manifold assembly according to the present application includes a plurality of manifolds. Each manifold includes a main body part, a first end part, and a second end part; the first end part and the second end part are located on two opposite sides of the main body part, and a second end part of one manifold of the manifold assembly is in interference connection with a first end part of the other manifold of the manifold assembly. In the above manner, through the interference connection between the second end part of the one manifold of the manifold assembly and the first end part of the other manifold of the manifold assembly, the two manifolds of the manifold assembly can be directly assembled, thereby reducing the use of adapter tubes, omitting the process of inserting the adapter tubes, reducing the assembly complexity of the manifold assembly, and reducing costs. In addition, the direct assembly of the two manifolds of the manifold assembly can reduce the connection points between connecting tubes and the two manifolds, thereby reducing the risk of failure of the manifold assembly.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a first embodiment of an electric device according to the present application;
FIG. 2 is a schematic diagram of an exploded structure of a first embodiment of a battery according to the present application;
FIG. 3 is a schematic structural diagram of a first embodiment of a manifold assembly according to the present application;
FIG. 4 is a schematic structural diagram of the first embodiment of the manifold assembly shown in FIG. 3;
FIG. 5 is a schematic structural diagram of a second embodiment of a manifold assembly according to the present application;
FIG. 6 is a schematic structural diagram of the second embodiment of the manifold assembly shown in FIG. 5;
FIG. 7 is a schematic structural diagram of a third embodiment of a manifold assembly according to the present application;
FIG. 8 is a schematic structural diagram of the third embodiment of the manifold assembly shown in FIG. 7;
FIG. 9 is a schematic diagram of an exploded structure of a second embodiment of a battery according to the present application;
FIG. 10 is a schematic structural diagram of a fourth embodiment of a manifold assembly according to the present application;
FIG. 11 is a schematic structural diagram of the fourth embodiment of the manifold shown in FIG. 10; and
FIG. 12 is a schematic diagram of an exploded structure of a third embodiment of a battery according to the present application.

Reference numerals in the detailed description are as follows:
vehicle 100;
battery 101; controller 102; motor 103;
case 11; battery cell 10; first part 11a; second part 12a;
manifold assembly 20; manifold 21; main body part 211; first end part 212; second end part 213; first sealing member 22; first guiding part 214; second guiding part 215; second sealing member 23;
liquid cooling plate 31; inlet pipe 32; outlet pipe 33; length direction L; width direction D; and height direction H.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the art to which the present application belongs. The terms used herein are only used to describe specific embodiments and are not intended to limit the present application. The terms "include", "comprise", "have", and any variants thereof in the specification and claims of the present application and the above description of the drawings are intended to cover a non-exclusive inclusion.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, battery cells are being applied in an increasing number of fields, and are gradually replacing traditional fossil energy in the field of automotive power. The battery cells can store chemical energy and controllably convert the chemical energy to electric energy. The rechargeable battery cells can continue to be used by activating the active substance through charging after the battery is discharged.

During use, heat is generated by the battery cells, and the heat generated by the battery cells is generally dissipated by a water cooling system. The water cooling system includes a plurality of manifolds and a plurality of adapter tubes, and two adjacent manifolds are connected via the adapter tubes, resulting in complex assembly and high costs.

Based on the above consideration, the present application provides a manifold assembly, a liquid cooling system, a case of a battery, a battery, and an electric device. Through the interference connection between a second end part of one manifold of the manifold assembly and a first end part of the other manifold of the manifold assembly, the two manifolds of the manifold assembly can be directly assembled, thereby reducing the use of adapter tubes, omitting the process of inserting the adapter tubes, reducing the assembly complexity of the manifold assembly, and reducing costs.

The manifold assembly, the liquid cooling system, the case of a battery, the battery, and the electric device disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

For ease of description, the present application is illustrated by taking a vehicle 100 as an example of the electric device according to an embodiment of the present application.

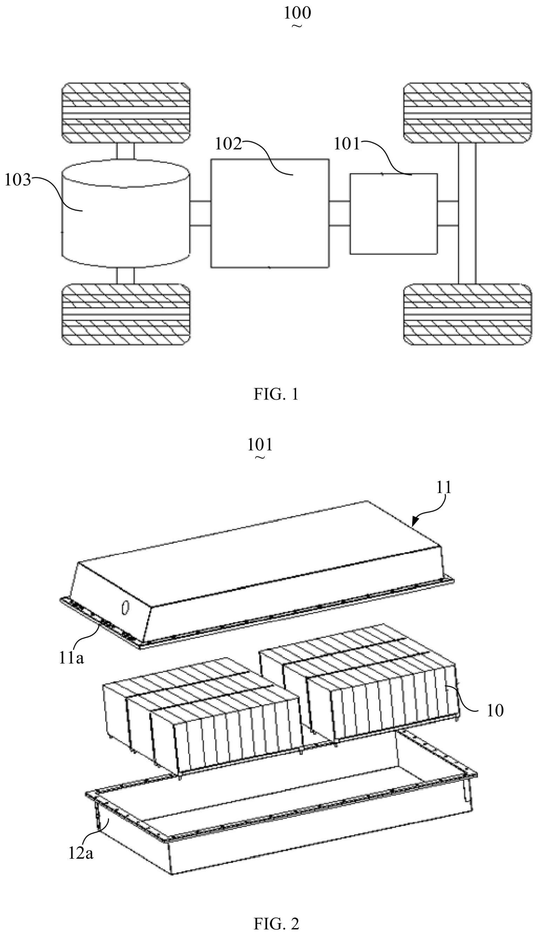

Referring to FIG. 1, the vehicle 100 may be a fuel vehicle, a gas vehicle, or a new energy vehicle. The new energy vehicle may be a pure electric vehicle, a hybrid vehicle, an extended-range vehicle, or the like. A battery 101 is arranged inside the vehicle 100, and the battery 101 may be arranged at the bottom, head, or tail of the vehicle 100. The battery 101 may be configured to supply power to the vehicle 100. For example, the battery 101 may serve as an operation power source for the vehicle 100. The vehicle 100 may further include a controller 102 and a motor 103. The controller 102 is configured to control the battery 101 to supply power to the motor 103, e.g., for operation power needed by the vehicle 100 for start-up, navigation, and driving.

In some embodiments of the present application, the battery 101 may not only serve as the operation power source for the vehicle 100, but also as a driving power source for the vehicle 100 to, instead of or in part instead of fuel or natural gas, provide driving power for the vehicle 100.

In some embodiments, the battery 101 may be an energy storage device. The energy storage device includes an energy storage container, an energy storage electrical cabinet, and the like.

The battery 101 mentioned in the embodiments of the present application refers to a single physical module including one or a plurality of battery cells 10 to provide higher voltage and capacity.

In the embodiments of the present application, the battery cell 10 may be a secondary battery. The secondary battery refers to a battery cell that can continue to be used by activating the active material through charging after the battery cell is discharged. Each battery cell 10 may also be a primary battery.

The battery cell 10 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application. The battery cell 10 may be cylindrical, flat, rectangular parallelepiped-shaped, or in other shapes.

In some embodiments, the battery 101 may be a battery module, and when a plurality of battery cells 10 are provided, the plurality of battery cells 10 are disposed and fixed to form one battery module.

In some embodiments, referring to FIG. 2, the battery 101 may be a battery pack. The battery pack includes a case 11 and battery cells 10. The battery cells 10 or the battery module are accommodated in the case 11.

In some embodiments, the case 11 may be a part of the chassis structure of the vehicle 100. For example, a part of the case 11 may become at least a part of the floor of the vehicle 100, or a part of the case 11 may become at least a part of the crossbeam and the longitudinal beam of the vehicle 100.

Referring to FIG. 2, the battery 101 includes a case 11 and battery cells 10. The battery cells 10 are accommodated in the case 11. The case 11 is configured to provide an accommodating space for the battery cells 10, and the case 11 may be of a variety of structures. In some embodiments, the case 11 may include a first part 11a and a second part 12a. The first part 11a and the second part 12a are mutually lidded onto each other, and the first part 11a and the second part 12a jointly define an accommodating space for accommodating the battery cells 10. The second part 12a may be of a hollow structure with one end open, and the first part 11a may be of a plate-shaped structure. The first part 11a is lidded onto the open side of the second part 12a, such that the first part 11a and the second part 12a jointly define the accommodating space. The first part 11a and the second part 12a may also each be of a hollow structure with one side open, and the open side of the first part 11a is lidded onto the open side of the second part 12a. Certainly, the case 11 formed by the first part 11a and the second part 12a may be in various shapes, such as cylindrical or rectangular parallelepiped-shaped.

In the battery 101, there may be a plurality of battery cells 10, and the plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 11. Certainly, the situation may be that in the battery 101, the plurality of battery cells 10 are first connected in series, in parallel, or in series-parallel to form battery modules, and then the plurality of battery modules are connected in series, in parallel, or in series-parallel to form a whole and accommodated in the case 11. The battery 101 may further include other structures. For example, the battery 101 may further include a busbar component for achieving electrical connection among the plurality of battery cells 10.

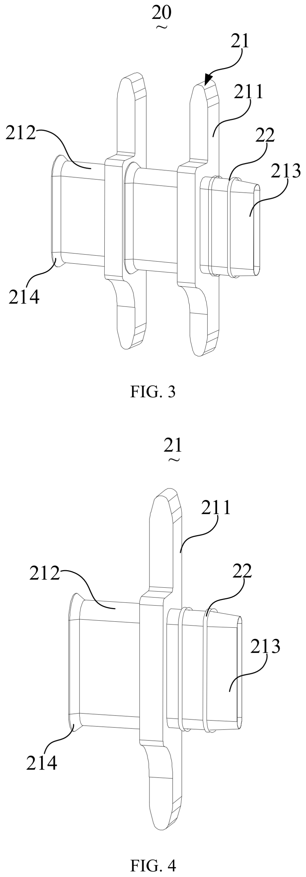

Referring to FIGs. 3 and 4, FIG. 3 is a schematic structural diagram of a first embodiment of a manifold assembly according to the present application; FIG. 4 is a schematic structural diagram of the first embodiment of the manifold assembly shown in FIG. 3. In this embodiment, the manifold assembly 20 includes a plurality of manifolds 21. The plurality of manifolds 21 refer to two or more manifolds 21. The manifold 21 refers to a component configured to collect a coolant liquid. The coolant liquid includes, but is not limited to, water.

Each manifold 21 includes a main body part 211, a first end part 212, and a second end part 213; the first end part 212 and the second end part 213 are located on two opposite sides of the main body part 211, and a second end part 213 of one manifold 21 of the manifold assembly 20 is in interference connection with a first end part 212 of the other manifold 21 of the manifold assembly 20.

The two opposite sides of the main body part 211 refer to two side surfaces of the main body part 211, and the two side surfaces of the main body part 211 are oppositely arranged. The first end part 212 and the second end part 213 are located on the two opposite sides of the main body part 211; that is, the first end part 212 is arranged on one side surface of the main body part 211, the second end part 213 is arranged on the other side surface of the main body part 211, and the one side surface of the main body part 211 is arranged opposite to the other side surface of the main body part 211.

The interference connection between the second end part 213 of the one manifold 21 of the manifold assembly 20 and the first end part 212 of the other manifold 21 of the manifold assembly 20 means that the second end part 213 of one manifold 21 is interference-fitted to the first end part 212 of the other manifold 21 to achieve connection.

Optionally, in the same manifold 21, a first through hole is formed in the first end part 212, a second through hole is formed in the second end part 213, and the first through hole of the first end part 212 is in communication with the second through hole of the second end part 213, so as to form a flow channel for collecting the coolant liquid.

The interference fit between the second end part 213 of one manifold 21 and the first end part 212 of the other manifold 21 means that the dimension of the second end part 213 of one manifold 21 is greater than the dimension of the first through hole of the first end part 212 of the other manifold 21, and the second end part 213 of one manifold 21 is assembled into the first through hole of the other manifold 21; the dimension of the second end part 213 refers to the cross-sectional area of the second end part 213.

Optionally, the main body part 211, the first end part 212, and the second end part 213 of one manifold 21 are integrally formed, so as to improve the sealing performance of the manifold 21.

Optionally, the shape of the first through hole and the shape of the second through hole include but are not limited to a circle, a rectangle, an ellipse, an oblong, or the like.

In this embodiment, through the interference connection between the second end part 213 of the one manifold 21 of the manifold assembly 20 and the first end part 212 of the other manifold 21 of the manifold assembly 20, the two manifolds 21 of the manifold assembly 20 can be directly assembled, thereby reducing the use of adapter tubes, omitting the process of inserting the adapter tubes, reducing the assembly complexity of the manifold assembly 20, and reducing costs. In addition, the direct assembly of the two manifolds 21 of the manifold assembly 20 can reduce the connection points between connecting tubes and the two manifolds, thereby reducing the risk of failure of the manifold assembly 20.

According to some embodiments of the present application, the cross-sectional area of the second end part 213 is smaller than the cross-sectional area of the first end part 212, thereby enabling the second end part 213 of one manifold 21 of the manifold assembly 20 to be located in the first end part 212 of the other manifold 21 of the manifold assembly 20.

The cross section of the second end part 213 refers to a section of the second end part 213 cut along a plane perpendicular to an extension direction of the second end part 213; the cross section of the first end part 212 refers to a section of the first end part 212 cut along a plane perpendicular to an extension direction of the first end part 212.

The cross-sectional area of the second end part 213 is smaller than the cross-sectional area of the first end part 212, and the cross-sectional area of the second end part 213 is greater than the area of the first through hole of the first end part 212, so as to assemble the second end part 213 of one manifold 21 into the first through hole of the other manifold 21, thereby enabling the second end part 213 of the one manifold 21 of the manifold assembly 20 to be located in the first end part 212 of the other manifold 21 of the manifold assembly 20.

In the embodiments, the cross-sectional area of the second end part 213 is set smaller than the cross-sectional area of the first end part 212, thereby facilitating the assembly of the second end part 213 of the one manifold 21 of the manifold assembly 20 into the first end part 212 of the other manifold 21, so as to reduce the assembly complexity of the manifold assembly 20.

According to some embodiments of the present application, both the first end part 212 and the second end part 213 are in a flat tubular shape.

The flat tube refers to a pipe having a flat shape; that is, both the shape of the first end part 212 and the shape of the second end part 213 are in a flat shape, such that both the shape of the first through hole of the first end part 212 and the shape of the second through hole of the second end part 213 are in a flat shape.

Assuming that the shape of the first through hole of the first end part 212 and the shape of the second through hole of the second end part 213 are both circular, if an increased flow rate of the coolant liquid flowing through the first through hole and the second through hole is required, the diameters of the first through hole and the second through hole need to be increased. However, in the embodiments, both the first end part 212 and the second end part 213 are in a flat tubular shape. Assuming that the flow rate of the coolant liquid flowing through the first through hole and the second through hole needs to be increased, the height of the first end part 212 and the height of the second end part 213 are increased, such that the space occupied by the manifold 21 can be reduced.

In the embodiments, both the first end part 212 and the second end part 213 are in a flat tubular shape, such that the cross-sectional area of the first end part 212 and the cross-sectional area of the second end part 213 can be increased, and the space occupied by the manifold 21 can be reduced.

According to some embodiments of the present application, the cross-sectional area of the second end part 213 decreases in an extension direction of the second end part 213.

The extension direction of the second end part 213 refers to a direction in which the second end part 213 is away from the main body part 211. That the cross-sectional area of the second end part 213 decreases in the extension direction of the second end part 213 may indicate a gradual decrease of the cross-sectional area of the second end part 213 in the extension direction of the second end part 213. For example, the second end part 213 may be a cone, and the cross-sectional area of the second end part 213 proximal to the main body part 211 is greater than the cross-sectional area of the second end part 213 distal to the main body part 211.

Taking the example that the cross-sectional area of the second end part 213 gradually decreases in the extension direction of the second end part 213, the cross-sectional area of the second end part 213 distal to the main body part 211 is relatively small, thereby facilitating the assembly of the second end part 213 to the first end part 212 of the other manifold 21. The cross-sectional area of the second end part 213 located in the first end part 212 of the other manifold 21 gradually increases, such that the second end part 213 of one manifold 21 of the manifold assembly 20 can be in interference connection with the first end part 212 of the other manifold 21, thereby improving the sealing performance between the second end part 213 and the first end part 212 of the other manifold 21. In addition, since the cross-sectional area of the second end part 213 gradually decreases in the extension direction of the second end part 213, the outer surface of the second end part 213 is an inclined surface and plays a guiding role, thereby further facilitating the assembly of the second end part 213 to the first end part 212 of the other manifold 21.

In the embodiments, the cross-sectional area of the second end part 213 decreases in the extension direction of the second end part 213, such that the second end part 213 of the one manifold 21 of the manifold assembly 20 can be in interference connection with the first end part 212 of the other manifold 21, thereby improving the sealing performance between the second end part 213 and the first end part 212. In addition, the cross-sectional area of the second end part 213 gradually decreases in the extension direction of the second end part 213, such that the outer surface of the second end part 213 is inclined to play a guiding role.

According to some embodiments of the present application, each manifold 21 includes at least one first sealing member 22, and the first sealing member 22 is arranged on the second end part 213. The at least one first sealing member 22 may include one first sealing member 22 or a plurality of first sealing members 22.

The first sealing member 22 is arranged on the outer surface of the second end part 213. When the second end part 213 of one manifold 21 is in interference connection with the first end part 212 of the other manifold 21, the first sealing member 22 is located between the second end part 213 of one manifold 21 and the first end part 212 of the other manifold 21. The first sealing member 22 is configured to seal a gap between the second end part 213 of one manifold 21 and the first end part 212 of the other manifold 21, thereby improving the sealing performance of the manifold assembly 20.

Optionally, the first sealing member 22 includes, but is not limited to, a sealing ring, and the first sealing member 22 is sleeved over the second end part 213. In other embodiments, the first sealing member 22 and the second end part 213 may be integrally formed.

In the embodiments, the first sealing member 22 is arranged on the second end part 213. When the second end part 213 of the one manifold 21 of the manifold assembly 20 is assembled into the first end part 212 of the other manifold 21, the first sealing member 22 is located between the second end part 213 and the first end part 212, and is configured to seal a gap between the second end part 213 and the first end part 212, thereby improving the sealing performance of the manifold assembly 20.

According to some embodiments of the present application, each manifold 21 further includes two first sealing members 22, and the two first sealing members 22 are spaced apart on the second end part 213 in the extension direction of the second end part 213.

The two first sealing members 22 are spaced apart on the outer surface of the second end part 213. When the second end part 213 of one manifold 21 is in interference connection with the first end part 212 of the other manifold 21, the two first sealing members 22 are located between the second end part 213 of one manifold 21 and the first end part 212 of the other manifold 21. The two first sealing members 22 are configured to seal a gap between the second end part 213 of one manifold 21 and the first end part 212 of the other manifold 21, thereby further improving the sealing performance of the manifold assembly 20.

In the embodiments, the two first sealing members 22 are spaced apart on the second end part 213. The two first sealing members 22 seal a gap between the second end part 213 of one manifold 21 and the first end part 212 of the other manifold 21, thereby further improving the sealing performance of the manifold assembly 20 and improving the quality of the manifold assembly 20.

According to some embodiments of the present application, each manifold 21 further includes a first guiding part 214, one end of the first end part 212 is connected to the main body part 211, and the other end of the first end part 212 is connected to the first guiding part 214.

The first guiding part 214 is configured to guide the second end part 213 of one manifold 21 to be assembled into the first end part 212; that is, the first guiding part 214 plays a guiding role.

In the embodiments, the first guiding part 214 is arranged at the other end of the first end part 212, and the first guiding part 214 is configured to guide the second end part 213 of the one manifold 21 of the manifold assembly 20 to be assembled into the first end part 212 of the manifold 21, thereby improving the assembly efficiency of the manifold assembly 20.

According to some embodiments of the present application, the cross-sectional area of the first guiding part 214 increases in an extension direction of the first end part 212.

The extension direction of the first end part 212 refers to a direction in which the first end part 212 is away from the main body part 211.

The cross-sectional area of the first guiding part 214 increases in the extension direction of the first end part 212; that is, the cross section of the first guiding part 214 gradually increases in a direction facing away from the main body part 211. For example, the first guiding part 214 is horn-shaped; that is, the cross-sectional area of an end of the first guiding part 214 distal to the main body part 211 is relatively large, which helps guide the second end part 213 of the one manifold 21 of the manifold assembly 20 to be assembled into the first end part 212 of the other manifold 21. In addition, during the process of assembling the second end part 213 of the one manifold 21 to the first end part 212 of the other manifold 21, an assembly tolerance may occur due to the dimensional tolerance of the assembly tool and/or the dimensional tolerance of the manifold 21. However, the cross-sectional area of the end of the first guiding part 214 distal to the main body part 211 is relatively large, thereby absorbing the assembly tolerance between the second end part 213 of the one manifold 21 and the first end part 212 of the other manifold 21 during assembly.

In the embodiments, the cross-sectional area of the first guiding part 214 increases in the extension direction of the first end part 212, and the cross-sectional area of the end of the first guiding part 214 distal to the main body part 212 is relatively large, which helps guide the second end part 213 of the one manifold 21 of the manifold assembly 20 to be assembled into the first end part 212 of the other manifold 21.

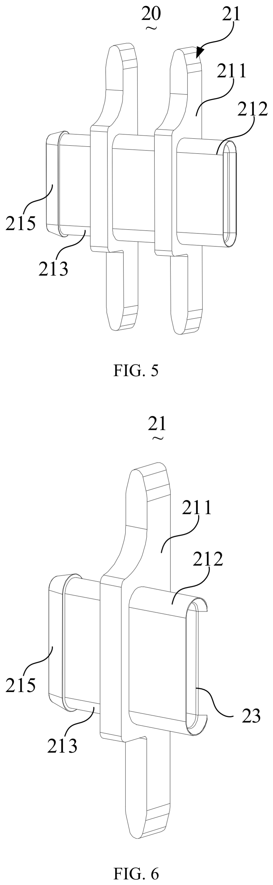

Referring to FIGs. 5 and 6, FIG. 5 is a schematic structural diagram of a second embodiment of a manifold assembly according to the present application; FIG. 6 is a schematic structural diagram of the second embodiment of the manifold assembly shown in FIG. 5. In this embodiment, the manifold assembly 20 includes a plurality of manifolds 21. Each manifold 21 includes a main body part 211, a first end part 212, and a second end part 213; the first end part 212 and the second end part 213 are located on two opposite sides of the main body part 211, and a second end part 213 of one manifold 21 of the manifold assembly 20 is in interference connection with a first end part 212 of the other manifold 21 of the manifold assembly 20.

Optionally, the cross-sectional area of the second end part 213 is smaller than the cross-sectional area of the first end part 212, and both the first end part 212 and the second end part 213 are in a flat tubular shape.

According to some embodiments of the present application, each manifold 21 further includes a second guiding part 215, and the second guiding part 215 is connected to an end of the second end part 213 distal to the main body part 211.

One end of the second end part 213 is connected to the main body part 211, and the other end of the second end part 213 is connected to the second guiding part 215. During the process of assembling the second end part 213 of one manifold 21 to the first end part 212 of the other manifold 21, the second guiding part 215 is configured to guide the second end part 213 of the one manifold 21 of the manifold assembly 20 to be assembled into the first end part 212 of the other manifold 21, thereby improving the assembly efficiency of the manifold assembly 20.

Optionally, the cross-sectional area of an end of the second guiding part 215 connected to the second end part 213 is greater than the cross-sectional area of the second end part 213, such that a step is formed at the joint of the second guiding part 215 and the second end part 213.

Optionally, the cross-sectional area of the end of the second guiding part 215 connected to the second end part 213 is greater than the cross-sectional area of a first through hole of the first end part 212, such that the second end part 213 of the one manifold 21 is in interference connection with the first end part 212 of the other manifold 21 of the manifold assembly 20.

In the embodiments, the second guiding part 215 is arranged at the end of the second end part 213 distal to the main body part 211, and the second guiding part 215 is configured to guide the second end part 213 of the one manifold 21 of the manifold assembly 20 to be assembled into the first end part 212 of the other manifold 21, thereby improving the assembly efficiency of the manifold assembly 20.

According to some embodiments of the present application, the cross-sectional area of the second guiding part 215 decreases in an extension direction of the second end part 213.

The extension direction of the second end part 213 refers to a direction in which the second end part 213 is away from the main body part 211. The cross-sectional area of the second guiding part 215 decreases in the extension direction of the second end part 213. For example, the cross-sectional area of the second guiding part 215 gradually decreases in the extension direction of the second end part 213; that is, the cross-sectional area of an end of the second guiding part 215 distal to the second end part 213 is relatively small, thereby facilitating the assembly of the second end part 213 into the first end part 212 of the other manifold 21 through the second guiding part 215. In addition, the cross-sectional area of the second guiding part 215 gradually decreases in the extension direction of the second end part 213, and the outer surface of the second guiding part 215 is an inclined surface and plays a guiding role.

In the embodiments, the second guiding part 215 is arranged at the end of the second end part 213 distal to the main body part 211, and is configured to guide the second end part 213 of the one manifold 21 of the manifold assembly 20 to be assembled into the first end part 212 of the other manifold 21, thereby improving the assembly efficiency of the manifold assembly 20.

According to some embodiments of the present application, each manifold 21 further includes a second sealing member 23, and the second sealing member 23 is arranged on an inner sidewall of the first end part 212.

Optionally, the second sealing member 23 is arranged on an inner sidewall of an end of the first end part 212 distal to the main body part 211. The second end part 213 of one manifold 21 of the manifold assembly 20 is assembled into the first end part 212 of the other manifold 21; that is, the second sealing member 23 is located between the first end part 212 and the second end part 213, and is configured to seal a gap between the second end part 213 of one manifold 21 and the first end part 212 of the other manifold 21, thereby improving the sealing performance of the manifold assembly 20.

Optionally, the material of the second sealing member 23 includes, but is not limited to, a soft rubber or a sealing ring. The soft rubber refers to a plastic formed by injection molding; that is, the inner sidewall of the end of the first end part 212 distal to the main body part 211 is provided with the plastic formed by injection molding, so as to form the second sealing member 23 on the inner sidewall of the first end part 212.

Optionally, the second sealing member 23 and the first end part 212 may be integrally formed.

In the embodiments, the second sealing member 23 is arranged on the inner sidewall of the first end part 212. The second end part 213 of the one manifold 21 of the manifold assembly 20 is assembled into the first end part 212 of the other manifold 21; that is, the second sealing member 23 is located between the first end part 212 and the second end part 213, and is configured to seal a gap between the second end part 213 of one manifold 21 and the first end part 212 of the other manifold 21, thereby improving the sealing performance of the manifold assembly 20.

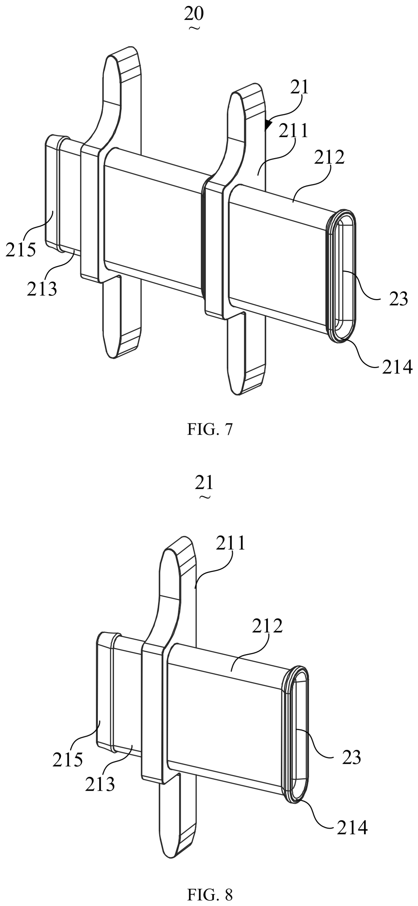

Referring to FIGs. 7 and 8, FIG. 7 is a schematic structural diagram of a third embodiment of a manifold assembly according to the present application; FIG. 8 is a schematic structural diagram of the third embodiment of the manifold assembly shown in FIG. 7. In this embodiment, the manifold assembly 20 includes a plurality of manifolds 21. Each manifold 21 includes a main body part 211, a first end part 212, and a second end part 213; the first end part 212 and the second end part 213 are located on two opposite sides of the main body part 211, and a second end part 213 of one manifold 21 of the manifold assembly 20 is in interference connection with a first end part 212 of the other manifold 21 of the manifold assembly 20.

The manifold assembly 20 according to this embodiment is different from the manifold assembly 20 disclosed in FIG. 5 in that each manifold 21 further includes a first guiding part 214, one end of the first end part 212 is connected to the main body part 211, and the other end of the first end part 212 is connected to the first guiding part 214.

The first guiding part 214 is configured to guide the second end part 213 of one manifold 21 to be assembled into the first end part 212; that is, the first guiding part 214 plays a guiding role.

In this embodiment, the first guiding part 214 is arranged at the other end of the first end part 212, and the first guiding part 214 is configured to guide the second end part 213 of the one manifold 21 of the manifold assembly 20 to be assembled into the first end part 212 of the manifold 21, thereby improving the assembly efficiency of the manifold assembly 20.

According to some embodiments of the present application, the cross-sectional area of the first guiding part 214 increases in an extension direction of the first end part 212.

The cross-sectional area of the first guiding part 214 increases in the extension direction of the first end part 212; that is, the cross section of the first guiding part 214 gradually increases in a direction facing away from the main body part 211. For example, the first guiding part 214 is horn-shaped; that is, the cross-sectional area of an end of the first guiding part 214 distal to the main body part 211 is relatively large, which helps guide the second end part 213 of the one manifold 21 of the manifold assembly 20 to be assembled into the first end part 212 of the other manifold 21. In addition, during the process of assembling the second end part 213 of the one manifold 21 to the first end part 212 of the other manifold 21, an assembly tolerance may occur due to the dimensional tolerance of the assembly tool and/or the dimensional tolerance of the manifold 21. However, the cross-sectional area of the end of the first guiding part 214 distal to the main body part 211 is relatively large, thereby absorbing the assembly tolerance between the second end part 213 of the one manifold 21 and the first end part 212 of the other manifold 21 during assembly.

In the embodiments, the cross-sectional area of the first guiding part 214 increases in the extension direction of the first end part 212, and the cross-sectional area of the end of the first guiding part 214 distal to the main body part 212 is relatively large, which helps guide the second end part 213 of the one manifold 21 of the manifold assembly 20 to be assembled into the first end part 212 of the other manifold 21.

According to some embodiments of the present application, each manifold 21 further includes a second sealing member 23, and the second sealing member 23 is arranged on an inner sidewall of the first guiding part 214.

Optionally, the second end part 213 of one manifold 21 of the manifold assembly 20 is assembled into the first end part 212 of the other manifold 21; that is, the second sealing member 23 is located between the first guiding part 214 and the second end part 213, and is configured to seal a gap between the second end part 213 of one manifold 21 and the first guiding part 214 of the other manifold 21, thereby improving the sealing performance of the manifold assembly 20.

Optionally, the material of the second sealing member 23 includes, but is not limited to, a soft rubber or a sealing ring. The soft rubber refers to a plastic formed by injection molding; that is, the inner sidewall of the first guiding part 214 is provided with the plastic formed by injection molding, so as to form the second sealing member 23 on the inner sidewall of the first guiding part 214.

Optionally, the second sealing member 23 and the first guiding part 214 may be integrally formed.

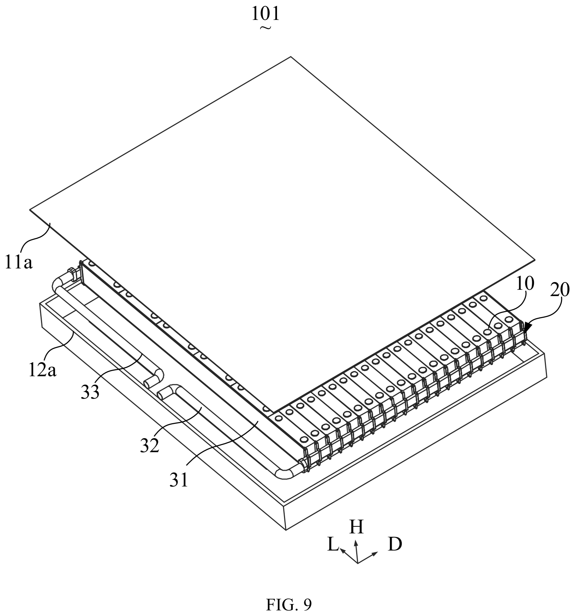

The present application provides a liquid cooling system. Referring to FIG. 9, FIG. 9 is a schematic diagram of an exploded structure of a second embodiment of a battery according to the present application. In this embodiment, the liquid cooling system includes a plurality of liquid cooling plates 31 and a manifold assembly 20. The manifold assembly 20 is the manifold assembly 20 disclosed in the above embodiments, which will not be repeated here.

The plurality of liquid cooling plates 31 refer to two or more liquid cooling plates 31. For example, if the coolant liquid is water, the liquid cooling plate 31 is a water cooling plate. The plurality of liquid cooling plates 31 are spaced apart from each other. For example, the plurality of liquid cooling plates 31 are spaced apart in a width direction D of the liquid cooling plates 31.

At least one cooling channel is formed in each liquid cooling plate 31 in a length direction L of the liquid cooling plate 31. The cooling channel is configured to convey a coolant liquid, for example, the cooling channel is configured to convey water.

The manifold 21 of the manifold assembly 20 is arranged at an end of the liquid cooling plate 31, a first manifold channel is formed in the main body part 211 of the manifold 21, and the first manifold channel of the main body part 211 is in communication with the cooling channel.

Optionally, the liquid cooling system includes two manifold assemblies 20. One manifold assembly 20 is arranged at one end of the liquid cooling plate 31, and the other manifold assembly 20 is arranged at the other end of the liquid cooling plate 31. Two opposite ends of the liquid cooling plate 31 are each provided with a manifold 21, such that two ends of the cooling channel are separately in communication with a first manifold channel of a corresponding manifold 21.

In this embodiment, the liquid cooling system includes the plurality of liquid cooling plates 31 and the manifold assembly 20. The manifold 21 of the manifold assembly 20 is arranged at an end of the liquid cooling plate 31, such that the first manifold channel of the main body part 211 is in communication with the cooling channel, thereby enabling the liquid cooling plate 31 to convey the coolant liquid through the manifold assembly 20.

According to some embodiments of the present application, a second manifold channel is formed in the first end part 212 and the second end part 213 of the manifold 21, and the second manifold channel is in communication with the first manifold channel.

The first through hole of the first end part 212 is in communication with the second through hole of the second end part 213 to form the second manifold channel of the first end part 212 and the second end part 213, and the second manifold channel is in communication with the first manifold channel.

Optionally, a flow direction of the coolant liquid in the first manifold channel is perpendicular to a flow direction of the coolant liquid in the second manifold channel.

Optionally, the liquid cooling system further includes an inlet pipe 32 and an outlet pipe 33. The inlet pipe 32 is connected to one of the two manifold assemblies 20. For example, the inlet pipe 32 is in communication with the first end part 212 or the second end part 213 of the manifold 21 of one manifold assembly 20. The outlet pipe 33 is connected to the other manifold assembly 20 of the two manifold assemblies 20. For example, the outlet pipe 33 is in communication with the first end part 212 or the second end part 213 of the manifold 21 of the other manifold assembly 20.

In the above manner, the coolant liquid flows into the cooling channels of all the liquid cooling plates 31 through the inlet pipe 32 and the manifold assembly 20, and then flows out through the manifold assembly 20 and the outlet pipe 33, thereby achieving water cooling.

The present application provides a case of a battery. As shown in FIG. 9, the case 11 is configured to accommodate a battery cell 10. The case 11 includes a liquid cooling system. The liquid cooling system is the liquid cooling system according to the above embodiments, which will not be repeated here.

The liquid cooling plate 31 of the liquid cooling system is attached to the battery cell 10 to cool the battery cell 10. For example, the coolant liquid flows through the liquid cooling plate 31 through the manifold assembly 20, thereby enabling the liquid cooling plate 31 to cool the battery cell 10 through the coolant liquid.

Optionally, the case 11 further includes an upper cover 11a and a lower case body 12a; the upper cover 11a and the lower case body 12a are mutually covered, and the upper cover 11a and the lower case body 12a together define an accommodating space for accommodating the battery cell 10 and the liquid cooling system.

The present application provides a battery. As shown in FIG. 9, the battery 101 includes a battery cell 10 and a case 11. The case 11 is configured to accommodate the battery cell 10, and the case 11 is the case 11 according to the above embodiments, which will not be repeated here.

The present application provides a battery. As shown in FIG. 9, the battery 101 includes a plurality of battery cells 10 and the liquid cooling system. At least part of the plurality of battery cells 10 are arranged between two adjacent liquid cooling plates 31 in the liquid cooling system; the liquid cooling system is configured to cool two opposite side surfaces of each of the at least part of the battery cells 10.

For example, all the battery cells 10 are arranged between the two adjacent liquid cooling plates 31 in the liquid cooling system. The liquid cooling system is configured to cool the two opposite side surfaces of all the battery cells 10 to dissipate heat generated by the battery cells 10, thereby improving the heat dissipation efficiency.

Optionally, as shown in FIG. 9, the height direction of the manifold 21 is the same as the height direction H of the liquid cooling plate 31. Both the first end part 212 and the second end part 213 of each manifold 21 are in a flat tubular shape; that is, the first end part 212 and the second end part 213 of the manifold 21 occupy the space of the battery 101 in the height direction H of the liquid cooling plate 31, thereby reducing the space of the battery 101 occupied by the manifold 21, and improving the energy density of the battery 101.

Assuming that the cross-sectional area of the first end part 212 and the cross-sectional area of the second end part 213 need to be increased, the first end part 212 and the second end part 213 are increased in the height direction H of the liquid cooling plate 31, without increasing the space occupied by the first end part 212 and the second end part 213 in the length direction L and the width direction D of the liquid cooling plate 31. Therefore, the space of the battery 101 occupied by the manifold 21 can be reduced, and the energy density of the battery 101 can be improved.

The present application provides an electric device. In the embodiments, the electric device includes a battery 101. The battery 101 is the battery 101 according to the above embodiments, which will not be repeated here.

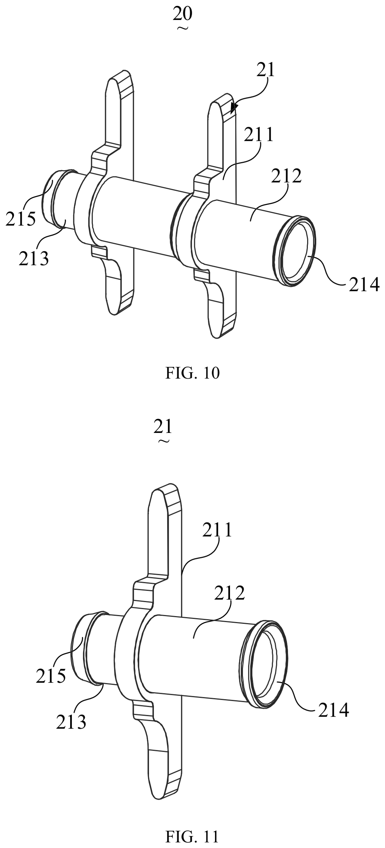

Referring to FIGs. 10 and 11, FIG. 10 is a schematic structural diagram of a fourth embodiment of a manifold assembly according to the present application; FIG. 11 is a schematic structural diagram of the fourth embodiment of the manifold assembly shown in FIG. 10. In this embodiment, the manifold assembly 20 includes a plurality of manifolds 21. Each manifold 21 includes a main body part 211, a first end part 212, and a second end part 213; the first end part 212 and the second end part 213 are located on two opposite sides of the main body part 211, and a second end part 213 of one manifold 21 of the manifold assembly 20 is in interference connection with a first end part 212 of the other manifold 21 of the manifold assembly 20.

Optionally, the cross-sectional area of the second end part 213 is smaller than the cross-sectional area of the first end part 212, and both the first end part 212 and the second end part 213 are cylindrical.

The statement that both the first end part 212 and the second end part 213 are cylindrical means that both the first end part 212 and the second end part 213 are circular tubes, and the diameter of the second end part 213 is smaller than the diameter of the first end part 212.

According to some embodiments of the present application, each manifold 21 further includes a first guiding part 214 and a second guiding part 215.

One end of the first end part 212 is connected to the main body part 211, and the other end of the first end part 212 is connected to the first guiding part 214. The first guiding part 214 is configured to guide the second end part 213 of one manifold 21 to be assembled into the first end part 212; that is, the first guiding part 214 plays a guiding role.

In the embodiments, the first guiding part 214 is arranged at the other end of the first end part 212, and the first guiding part 214 is configured to guide the second end part 213 of the one manifold 21 of the manifold assembly 20 to be assembled into the first end part 212 of the manifold 21, thereby improving the assembly efficiency of the manifold assembly 20.

The cross-sectional area of the first guiding part 214 increases in an extension direction of the first end part 212; that is, the cross section of the first guiding part 214 gradually increases in a direction facing away from the main body part 211. For example, the first guiding part 214 is horn-shaped; that is, the cross-sectional area of an end of the first guiding part 214 distal to the main body part 211 is relatively large, which helps guide the second end part 213 of the one manifold 21 of the manifold assembly 20 to be assembled into the first end part 212 of the other manifold 21.

Optionally, the material of the inner sidewall of the first guiding part 214 includes, but is not limited to, a soft rubber. The soft rubber refers to a plastic formed by injection molding; that is, the inner sidewall of the first guiding part 214 is provided with the plastic formed by injection molding, so as to form the soft rubber on the inner sidewall of the first guiding part 214.

One end of the second end part 213 is connected to the main body part 211, and the other end of the second end part 213 is connected to the second guiding part 215. During the process of assembling the second end part 213 of one manifold 21 to the first end part 212 of the other manifold 21, the second guiding part 215 is configured to guide the second end part 213 of the one manifold 21 of the manifold assembly 20 to be assembled into the first end part 212 of the other manifold 21, thereby improving the assembly efficiency of the manifold assembly 20.

Optionally, the cross-sectional area of an end of the second guiding part 215 connected to the second end part 213 is greater than the cross-sectional area of the second end part 213, such that a step is formed at the joint of the second guiding part 215 and the second end part 213.

Optionally, the cross-sectional area of the end of the second guiding part 215 connected to the second end part 213 is greater than the cross-sectional area of a first through hole of the first end part 212, such that the second end part 213 of the one manifold 21 is in interference connection with the first end part 212 of the other manifold 21 of the manifold assembly 20.

In the embodiments, the second guiding part 215 is arranged at the end of the second end part 213 distal to the main body part 211, and the second guiding part 215 is configured to guide the second end part 213 of the one manifold 21 of the manifold assembly 20 to be assembled into the first end part 212 of the other manifold 21, thereby improving the assembly efficiency of the manifold assembly 20.

The cross-sectional area of the second guiding part 215 decreases in the extension direction of the second end part 213. The extension direction of the second end part 213 refers to a direction in which the second end part 213 is away from the main body part 211. The cross-sectional area of the second guiding part 215 decreases in the extension direction of the second end part 213. For example, the cross-sectional area of the second guiding part 215 gradually decreases in the extension direction of the second end part 213; that is, the cross-sectional area of an end of the second guiding part 215 distal to the second end part 213 is relatively small, thereby facilitating the assembly of the second end part 213 into the first end part 212 of the other manifold 21 through the second guiding part 215. In addition, the cross-sectional area of the second guiding part 215 gradually decreases in the extension direction of the second end part 213, and the outer surface of the second guiding part 215 is an inclined surface and plays a guiding role.

In the embodiments, the second guiding part 215 is arranged at the end of the second end part 213 distal to the main body part 211, and is configured to guide the second end part 213 of the one manifold 21 of the manifold assembly 20 to be assembled into the first end part 212 of the other manifold 21, thereby improving the assembly efficiency of the manifold assembly 20.

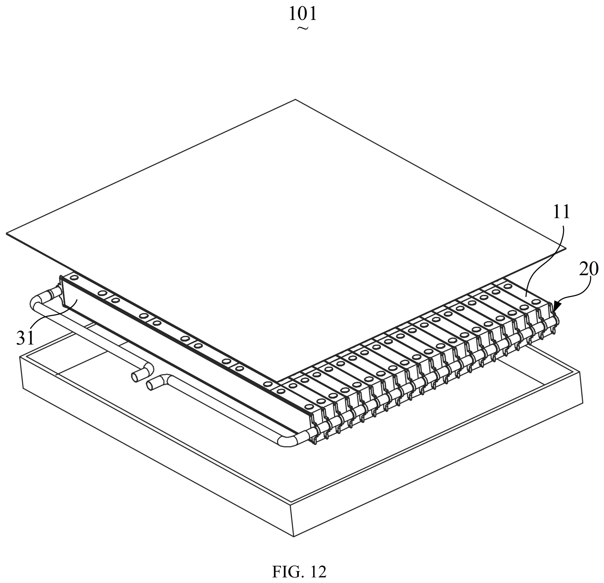

The present application provides a battery. Referring to FIG. 12, FIG. 12 is a schematic diagram of an exploded structure of a third embodiment of a battery according to the present application. In this embodiment, the battery 101 includes a plurality of battery cells 10 and a liquid cooling system. At least part of the plurality of battery cells 10 are arranged between two adjacent liquid cooling plates 31 in the liquid cooling system; the liquid cooling system is configured to cool two opposite side surfaces of each of the at least part of the battery cells 10. The liquid cooling system includes a plurality of liquid cooling plates 31 and a manifold assembly 20. The manifold assembly 20 is the manifold assembly 20 shown in FIG. 8, which will not be repeated here.

In summary, in the present application, through the interference connection between the second end part 213 of one manifold 21 of the manifold assembly 20 and the first end part 212 of the other manifold 21 of the manifold assembly 20, the two manifolds 21 of the manifold assembly 20 can be directly assembled, thereby reducing the use of adapter tubes, omitting the process of inserting the adapter tubes, reducing the assembly complexity of the manifold assembly 20, and reducing costs. In addition, the direct assembly of the two manifolds 21 of the manifold assembly 20 can reduce the connection points between connecting tubes and the two manifolds, thereby reducing the risk of failure of the manifold assembly 20.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A manifold assembly, wherein the manifold assembly comprises a plurality of manifolds, each manifold comprises a main body part, a first end part, and a second end part, the first end part and the second end part are located on two opposite sides of the main body part, and a second end part of one manifold of the manifold assembly is in interference connection with a first end part of another manifold of the manifold assembly.

2. The manifold assembly according to claim 1, wherein a cross-sectional area of the second end part is smaller than a cross-sectional area of the first end part, thereby enabling the second end part of the one manifold of the manifold assembly to be located in the first end part of the other manifold of the manifold assembly.

3. The manifold assembly according to claim 2, wherein both the first end part and the second end part are in a flat tubular shape.

4. The manifold assembly according to claim 3, wherein the cross-sectional area of the second end part decreases in an extension direction of the second end part.

5. The manifold assembly according to claim 2, wherein both the first end part and the second end part are cylindrical.

6. The manifold assembly according to claim 4 or 5, wherein each manifold comprises at least one first sealing member, and the first sealing member is arranged on the second end part.

7. The manifold assembly according to claim 6, wherein each manifold further comprises two first sealing members, and the two first sealing members are spaced apart on the second end part in the extension direction of the second end part.

8. The manifold assembly according to any one of claims 4 to 7, wherein each manifold further comprises a first guiding part, one end of the first end part is connected to the main body part, and the other end of the first end part is connected to the first guiding part.

9. The manifold assembly according to claim 8, wherein a cross-sectional area of the first guiding part increases in an extension direction of the first end part.

10. The manifold assembly according to claim 3, wherein each manifold further comprises a second guiding part connected to an end of the second end part distal to the main body part.

11. The manifold assembly according to claim 10, wherein a cross-sectional area of the second guiding part decreases in an extension direction of the second end part.

12. The manifold assembly according to claim 10 or 11, wherein each manifold further comprises a second sealing member, and the second sealing member is arranged on an inner sidewall of an end of the first end part distal to the main body part.

13. The manifold assembly according to claim 10 or 11, wherein each manifold further comprises a first guiding part and a second sealing member, one end of the first end part is connected to the main body part, the other end of the first end part is connected to the first guiding part, and the second sealing member is arranged on an inner sidewall of the first guiding part.

14. A liquid cooling system, comprising:
a plurality of liquid cooling plates spaced apart from each other, wherein at least one cooling channel is formed in each liquid cooling plate in a length direction of the liquid cooling plate; and
the manifold assembly according to any one of claims 1 to 13, wherein the manifold of the manifold assembly is arranged at an end of the liquid cooling plate, a first manifold channel is formed in the main body part of the manifold, and the first manifold channel is in communication with the cooling channel.

15. The liquid cooling system according to claim 14, wherein a second manifold channel is formed in the first end part and the second end part of the manifold, and the second manifold channel is in communication with the first manifold channel.

16. A case of a battery, wherein the case is configured to accommodate a battery cell, the case comprises the liquid cooling system according to claim 14 or 15, the liquid cooling plate of the liquid cooling system is attached to the battery cell to cool the battery cell.

17. A battery, comprising:
a battery cell; and
the case according to claim 16, wherein the case is configured to accommodate the battery cell.

18. A battery, comprising:
a plurality of battery cells; and
the liquid cooling system according to claim 14 or 15, wherein at least part of the plurality of battery cells are arranged between two adjacent liquid cooling plates in the liquid cooling system, and the liquid cooling system is configured to cool two opposite side surfaces of each of the at least part of the battery cells.

19. An electric device, comprising the battery according to claim 18.
